Europäisches Patentamt

European Patent Office

Office européen des brevets

(19)

(11) **EP 1 227 421 A2**

(12) **EUROPEAN PATENT APPLICATION**

(43) Date of publication:
　　**31.07.2002　Bulletin 2002/31**

(51) Int Cl.$^7$: **G06F 17/60**

(21) Application number: **01131038.0**

(22) Date of filing: **28.12.2001**

| | |
|---|---|
| (84) Designated Contracting States:<br>　　**AT BE CH CY DE DK ES FI FR GB GR IE IT LI LU<br>　　MC NL PT SE TR**<br>　　Designated Extension States:<br>　　**AL LT LV MK RO SI**<br><br>(30) Priority:　**28.12.2000　JP 2000400344**<br><br>(71) Applicant: **WebMoney Corporation<br>　　Tokyo 141-0021 (JP)** | (72) Inventor: **Takatsu, Yuichi<br>　　Tokyo 141-0021 (JP)**<br><br>(74) Representative:<br>　　**Patentanwälte Rüger, Barthelt & Abel<br>　　Webergasse 3<br>　　73728 Esslingen (DE)** |

(54) **Electronic settlement apparatus, electronic settlement method and computer-program**

(57)　When an operator inputs a login ID of a member and a password thereof using a terminal(2-k) and they are confirmed by a point server(12-j), a Web server(11-j) receives an order of goods. When the operator designates the number of points for payment and issues order information, the point server(12-j) assigns the points to this member according to the sum total of purchase prices. The Web server(11-j) requests a settlement server (3) about settlement using settlement points per a part where no point is used, and the settlement server(3) performs settlement processing. When settlement is ended, the point server(12-j) determines a variation in the points of the members.

FIG.1

## Description

The present invention relates to an electronic settlement apparatus and an electronic settlement method, and particularly to an electronic settlement apparatus that makes settlement using data representing a property value and an electronic settlement method.

In recent years, there has increasingly used the electronic settlement that makes settlement of business transactions by transmitting and receiving data representing a property value in place of the money. Since data representing the property value can be easily transferred via a network such as the Internet, settlement using the network becomes possible according to the method of electronic settlement.

However, the clients, who feel the electronic settlement method to be burdensome as compared with the conventional settlement by the money, tended to avoid using the electronic settlement since they did not find out the additional value in the electronic settlement.

Moreover, the following problem occurred. Namely, if many orders are made before completing a reduction of data representing the property value without completing settlement, the business transaction is established even though the business transaction exceeding the balance is actually conducted.

The present invention has been made with consideration given to the aforementioned circumstances, and it is an object of the present invention is to provide an electronic settlement apparatus for providing an additional value to clients who perform electronic settlement, and an electronic settlement method.

Moreover, it is an object of the present invention is to provide an electronic settlement apparatus that prevents an illegal transaction exceeding the balance, and an electronic settlement method.

In order to attain the above objects, according to a first aspect of the present invention, there is provided an electronic settlement apparatus, characterized by comprising a structure (1-1 to 1-m, 4) for providing an additional value to those who perform electronic settlement and/or preventing an illegal transaction.

The electronic settlement apparatus may be characterized by comprising: memory (12B-1 to 12B-m, 4B) for storing discount points representing a property value to be associated with a user to which the discount points are assigned; and a processor (12A-1 to 12A-m, 4A), wherein the processor obtains goods data that designates goods and use point data that designates an amount to be appropriated for the price of the goods, decides the discount points to be newly assigned to the user based on the obtained goods data, and when settlement data, which represents that settlement of purchase of the goods is completed, is supplied, the processor decides that goods represented by the goods data is goods that the user will purchase and updates the discount points stored in the memory to be varied by an amount corresponding to a value obtained by subtracting the value of the discount points designated by the use point data from the value of the discount points decided to be newly assigned to the user.

According to the above electronic settlement apparatus, the discount points, which are appropriated for the price, are assigned to the user every time when goods are purchased. Accordingly, an additional value is provided to the client who performs settlement using such an electronic settlement apparatus.

The electronic settlement apparatus may further comprise a receiving server (11-1 to 11-m) for obtaining the goods data and the use point data from an external section via a network so as to be transferred to the processor.

In this case, the processor may obtain the goods data and the user point data transferred from the receiving server.

The memory may store user identification data that identifies the user to which the discount points are assigned to be associated with the discount points, and a password associated with the user identification data.

In this case, the processor may obtain information and password representing the user; determine whether or not the memory stores the user identification data that identifies the user represented by the obtained information and the obtained password to be associated with each other; and stop obtaining the goods data or the user point data when determining that the memory stores neither user identification data nor the password to be associated with each other.

With the above structure, since the electronic settlement apparatus permits only the user prestored to conduct a business transaction, the disordered use of the electronic settlement apparatus is prevented.

The processor obtains information, which is supplied from an external section and which represents the user, in accordance with an instruction supplied from the external section, and generates the user identification data that identifies the user represented by obtained information and the password associated with the user identification data, and store the user identification data and password in the memory, whereby the processor receives the new registration of user.

The memory stores user information unique to the user identified by the corresponding user identification data to be associated with the user identification data. Accordingly, for example, if user information is composed of user's address and name, whereby making it easy to grasp the distribution destination of goods.

When the processor determines that the user identification data that identifies the user represented by the information obtained by the processor and the password obtained by the processor are stored in the memory to he associated with each other, the processor updates the user information stored in the memory to be associated with the user identification data to user information supplied from the external section, whereby permitting the authenticated user to change user information.

When the processor determines whether or not the settlement data is supplied to the processor until a predetermined time has elapsed after obtaining goods data, and when the processor determines that no settlement data is supplied thereto, the processor abandons the obtained corresponding goods data. Resultantly, goods data is supplied numerous times for a short time, preventing an illegal transaction that exceeds the balance of points from being conducted.

The electronic settlement apparatus further comprises a settlement server (3), wherein the settlement server stores settlement points representing a property value to be associated with identification data unique to the settlement points; determines whether or not the processor obtains the goods data and the use point data; obtains the identification data from the external section when it is determined that the processor obtains the goods data and the use point data; decides that a difference between an amount of settlement points corresponding to the price of goods represented by the goods data and an amount of settlement points corresponding to the discount points represented by the use point data is appropriated for the price of the goods; and supplies the settlement data to the processor when the settlement points associated with the obtained identification data are more than the difference. This may permit the user to perform settlement using the settlement points.

The memory may store conversion rate data representing a conversion rate between the discount points and the settlement points.

In this case, any processor may be used if the processor specifies the amount of settlement points corresponding to the discount points represented by the use point data according to the conversion rate represented by the conversion rate data.

The processor determines whether or not the price of goods represented by the goods data reaches a predetermined minimum purchase amount, and decides that no discount point is assigned to the user when determining that the price of goods does not reach the predetermined minimum purchase amount. This prevents occurrence of such a case that small business transactions frequently occur so that the discount points are excessively assigned and processing for assigning points becomes complicated.

The processor determines whether or not the discount points represented by the use point data obtained by the processor are more than a predetermined available points, and handles the available points as discount points. This prevents an excessive number of discount points from being used at one business transaction.

The receiving server may supply goods data and use point data obtained by the receiving server to the processor via a LAN (Local Area Network).

While, the receiving server may supply goods data and use point data obtained by the receiving server to the processor via a WWW (World Wide Web).

In the case where data supply is carried out via either LAN or WWW, said processor may decide discount points to be newly assigned to said user based on the price of the goods data supplied from the receiving server, and update the discount points stored in the memory to be varied by an amount corresponding to a value obtained by subtracting the discount points designated by use point data supplied from the receiving server from the discount points decided by the processor.

The receiving server may generate order identification data unique to each goods data obtained by the receiving server so as to be supplied to the processor, and may supply reception identification data unique to the receiving server to the processor to be associated with the goods data.

With the above structure, the order that the electronic settlement apparatus receives can be specified by order identification data and reception identification data.

The memory may store assignment rate data that designates discount points to be newly assigned to the user per unit quantity of the price of the goods.

In this case, the processor may decide a value obtained by multiplying the price of goods represented by goods data obtained by the processor by the discount points designated by the assignment rate data as discount points to be newly assigned to the user.

The goods data may include point designation information that designates discount points to be assigned to a person who purchases goods represented by the goods data.

The processor may decide the discount points represented by the point designation information included in the goods data obtained by the processor as discount points to be newly assigned to the user.

The processor may generate temporary balance data representing a result obtained by varying the discount points stored in the memory by amount corresponding to a value obtained by subtracting the discount points designated by use point data from the discount paints decided to be newly assigned to the user, handle a value represented by the temporary balance data generated latest as discount points stored in the memory until the settlement data is supplied from the external section, and update the discount points stored in the memory according to the result represented by the temporary balance data when the settlement data is supplied from the external section.

In the case having the above structure, even if there is a transaction whose settlement is not completed yet, the electronic settlement apparatus handles it as a case in which settlement is completed in a scene where the balance of discount points is specified. This prevents an illegal transaction that exceeds the balance of points from being conducted.

The electronic settlement apparatus may be characterized by comprising: a receiving server (11-1 to 11-m) for obtaining goods data that designates goods and use point data that designates an amount to be appropriated for the price of the goods in the discount points representing a property value from an external section via a network; memory (12B-1 to 12B-m, 4B) for storing the discount points to be associated with a user to which the discount points are assigned; and a processor (12A-1 to 12A-m, 4A), wherein the memory further stores user identification data that identifies the user to which the discount points are assigned to be associated with the discount points, and a password associated with the user identification data; and the processor obtains information and password representing the user from an external section; determines whether or not the memory stores the user identification data that identifies the user represented by the obtained information and the obtained password to be associated with each other; obtains goods data and use point data obtained by the receiving server from the receiving server via the network when determining that the memory stores the user identification data and the password to be associated with each other; prevents the receiving server from obtaining the goods data or the user point data when determining that the memory stores neither user identification data nor the password to be associated with each other; decides discount points to be newly assigned to the user based on the goods data obtained by the receiving server; decides that goods represented by goods data obtained from the receiving server is handled as goods that the user will purchase when settlement data representing that settlement of the purchase of the goods is completed is supplied from the external section; and updates the discount points stored by the memory to be varied by an amount corresponding to a difference between the discount points determined to be newly assigned to the user and the discount points designated by the use point data obtained from the receiving server.

Even with the above electronic settlement apparatus, the discount points, which are appropriated for the price, are assigned to the user every time when goods are purchased. Accordingly, an additional value is provided to the client who performs settlement using such an electronic settlement apparatus.

Moreover, since the electronic settlement apparatus permits only the user prestored to conduct a business transaction, the disordered use of the electronic settlement apparatus is prevented. Then, the receiving server that performs data transmission via the network is not related to obtaining user identification data and password and this prevents a danger that user identification data and password are leaked via the network. Accordingly, the safety of authentication of member is high.

According to a second aspect of the present invention, there is provided a electronic settlement method, characterized by comprising the steps of: storing discount points representing a property value to be associated with a user to which the discount points are assigned; obtaining goods data that designates goods and use point data that designates an amount to be appropriated for the price of the goods in the discount points from an external section via a network; deciding a discount points to be newly assigned to the user based on the obtained goods data; deciding that goods represented by goods data obtained is handled as goods that the user will purchase when settlement data representing that settlement of the purchase of the goods is completed is supplied from the external section; and updating the discount points stored to be varied by an amount corresponding to a value obtained by subtracting the value of the discount points designated by the use point data from the value of the discount points decided to be newly assigned to the user.

According to the above electronic settlement apparatus, the discount points, which arc appropriated for the price, are assigned to the user every time when goods are purchased. Accordingly, an additional value is provided to the client who performs settlement using such an electronic settlement apparatus.

According to a third aspect of the present invention, there is provided a computer-program, characterized by causing a computer to perform functions of storing discount points representing a property value to be associated with a user to which the discount points are assigned; obtaining goods data that designates goods and use point data that designates an amount to be appropriated for the price of the goods in the discount points from an external section via a network; deciding discount points to be newly assigned to the user based on the obtained goods data; deciding that goods represented by goods data obtained is handled as goods that the user will purchase when settlement data representing that settlement of the purchase of the goods is completed is supplied from the external section; and updating the discount points stored to be varied by an amount corresponding to a value obtained by subtracting the value of the discount points designated by the use point data from the value of the discount points decided to be newly assigned to the user.

According to the computer that executes the program, the discount points, which are appropriated for the price, are assigned to the user every time when goods are purchased. Accordingly, an additional value is provided to the client who performs settlement using such a computer.

These objects and other objects and advantages of the present invention will become more apparent upon reading of the following detailed description and the accompanying drawings in which:

FIG. 1 is a view illustrating the configuration of a point system according to an embodiment of the present invention;

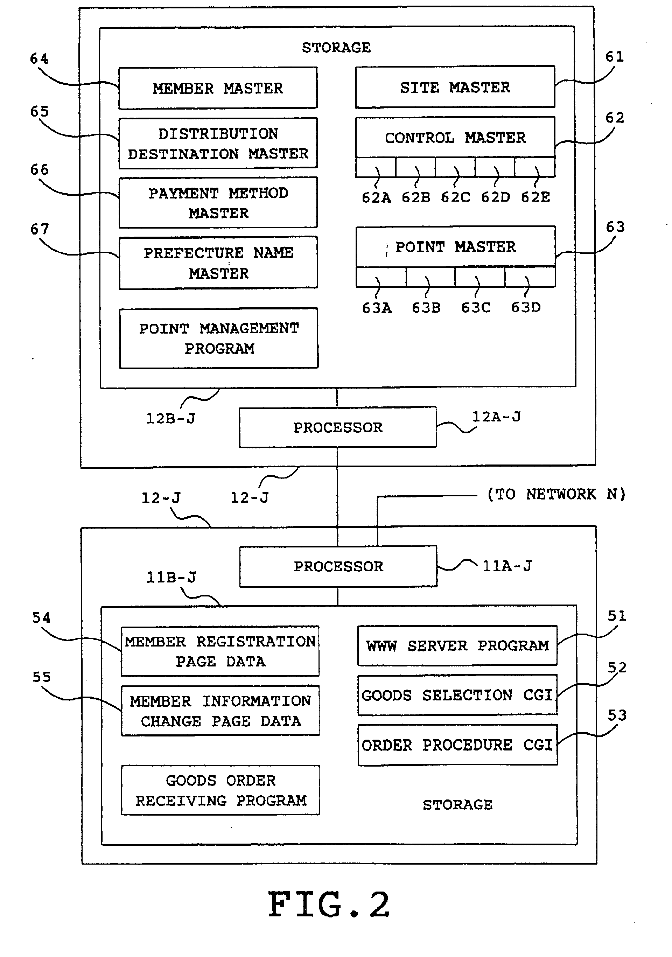

FIG. 2 is a view schematically illustrating the configuration of data, which a Web server and a point server store;

FIGS. 3A, 3B, 3C, and 3D are flowcharts each illustrating processing, which is carried out at a goods purchasing time;

FIG. 4 is a flowchart illustrating processing, which is carried out at a member registering time;

FIGS. 5A and 5B are flowcharts each illustrating processing, which is carried out at a member information changing time;

FIG. 6 is a view illustrating the configuration of a modification of the point system of FIG. 1; and

FIG. 7 is a view illustrating the configuration of a modification of the point system of FIG. 6.

The following will explain the electronic settlement apparatus and electronic settlement method according to an embodiment of the present invention taking a point system that gives a point having a property value to a person, who has conducted a business transaction with a member store, as an example.

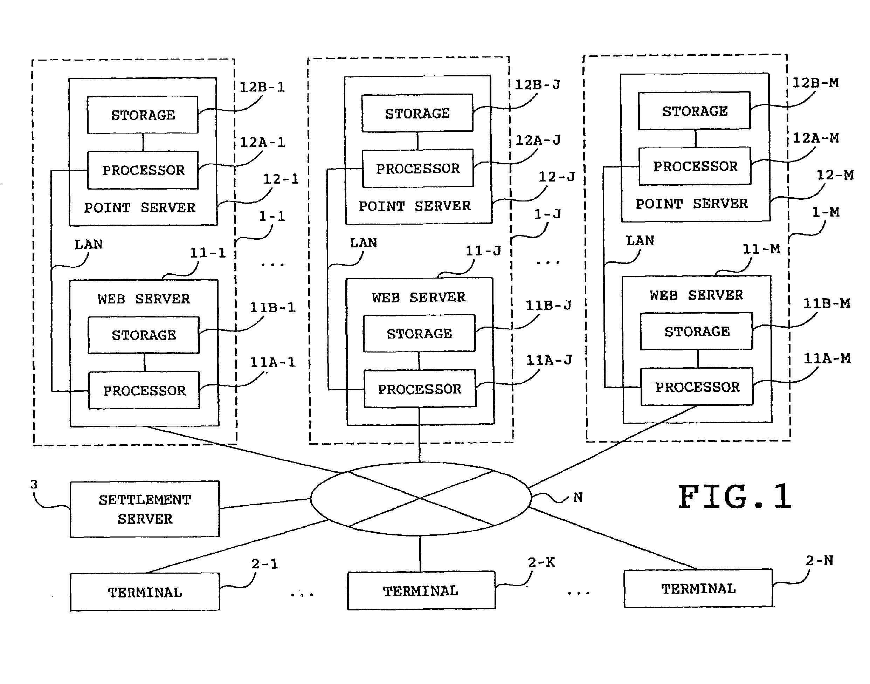

FIG. 1 is a view illustrating the configuration of a point system according to an embodiment of the present invention.

As illustrated in the figure, this point system is composed of member store sites 1-1 to 1-m (m denotes the total number of member stores), terminals 2-1 to 2-n (n denotes the total number of terminals), and a settlement server 3. The member store sites 1-1 to 1-m, terminals 2-1 to 2-n (n denotes the total number of terminals) and settlement server 3 are connected to one another via a network N including WWW (World Wide Web) and the like.

The member store sites 1-1 to 1-m have the same structure one another. The member store site 1-j (j denotes an arbitrary integer of one or more and below m) includes a Web server 11-j and a point server 12-j. The Web server 11-j and point server 12-j are connected to each other via a LAN (Local Area Network) unique to the member store site 1-j. Moreover, each of Web servers 11-1 to 11-m is assigned a site ID (Identification), which is unique to each server.

The Web server 11-j is composed of a processor 11A-j and storage 11B-j connected to the processor 11A-j.

The processor 11A-j includes a CPU (Central Processing Unit), a DSU (Data Service Unit) and the like. The processor 11A-j is connected to the processor 12A-j of point server 12-j to be described later via LAN of the member store site 1-j.

The storage 11B-j includes a hard disk device, RAM (Random Access Memory), etc. The storage 11B-j prestores a goods order receiving program for controlling processing (to be described later) that the processor 11A-j executes, a WWW server program 51, a goods selection CGI (Common Gateway Interface) 52, an order procedure CGI 53, member registration page data 54, and member information change page data 55. Then, the storage 11B-j supplies such data that the storage 11B-j stores to the processor 11A-j in response to access from the processor 11A-j.

The WWW server program 51 is a program for causing the Web server 11-j to carry out processing of WWW server. When a URL (Uniform Resource Locator) showing a logical position of data is supplied to the Web server 11-j that executes the WWW server program 51, the Web server 11-j reads data, which is stored in a storage area of the storage 12B-j (or a storage area of other storage to which the processor 12A-j can gain acccss) and which is placed at the logical position indicated by this URL. Then, the Web server 11-j sends read data back to the supply source of URL.

The goods selection CGI 52 is a program for generating data representing a goods selection page to be described later.

The order procedure CGI 53 is a program for generating data representing an order procedure page to be described later.

The goods selection page and order procedure page are Web pages that the Web server 11-j causes the terminals 2-1 to 2-n to display according to processing to be described.

The member registration page data 54 is data representing a member registration page. The member registration page is a Web page that the Web server 11-j causes the terminals 2-1 to 2-n to display according to processing to be described.

The member registration page includes a field for inputting a name and an address of a person who intends to a member. Also, the member registration page, which is represented by member registration page data 54 that the storage 11B-j stores, includes a transmission button for instructing the name and address input in this field to be transmitted to the Web server 11-j.

Member information change page data 55 is data representing a membcr information change page. The member information change page is a Web page that the Web server 11-j causes the terminals 2-1 to 2-n to display according to processing to be described.

The member information change page includes a field for inputting changed member information relating to a member whose member information is to be changed. Moreover, the member information change page, which is represented by member information change data 55 that the storage 11 B-j stores, includes a transmission button for instructing changed member information input in this field to be transmitted to the Web server 11-j.

The point server 12-1 is composed of the processor 12A-j and the storage 12B-j connected to the processor 12A-j.

The processor 12A-j includes CPU, DSU, etc.; and a timer. The processor 12A-j executes processing to be described later under control of a point management program (to be described later) that the storage 12B-j stores. The timer is composed of a crystal oscillator and the like, generates time information, which represents a current time, and outputs it sequentially.

The storage 12B-j is composed of a hard disk device, RAM and the like. The storage 12B-j prestores a point management program, a site master 61, a control master 62, a point master 63, a member master 64, a distribution destination master 65, a payment method master 66, and a prefecture name mater 67. The point management program is a program for controlling processing (to be described later) that the processor 12B-j executes.

The site master 61 that the storage 12B-j stores the aforementioned site ID identifying the Web server that can gain access to the site mater 61. It should be noted that the Web server accessible to the storage 12B-j is only the Web server 11-j in this embodiment.

The control master 62 prestores a connection mode flag 62A, an obtaining point management flag 62B, a use point number designation flag 62C, a member master use flag 62D, and a fraction processing flag 62E. It is possible to update the connection mode flag 62A, obtaining point management flag 62B, use point number designation flag 62C, member master use flag 62D, and fraction processing flag 62E according to an operation that is carried out by the manager of the point server 12-j.

The connection mode flag 62A is a flag that shows whether the Web server 11-j is connected to the point server 12-j via WWW or LAN. In the configuration of FIG. 1, the value of the connection mode flag 62A that the Web server 11-j stores is a value representing that the Web server 11-j is connected to the point server 12-j via LAN.

The obtaining point management flag 62B is a flag that designates a condition for deciding the number of points to be assigned to the member. More specifically, (B1) the obtaining point management flag 62B gives the number of points, which is obtained by multiplying the total amount of money for goods that the member has purchased from the member store by a point obtaining rate shown by obtaining rate data 63C (to be described later) stored in the point master 63. Or, (B2) the obtaining point management flag 62B gives the number of points that is designated by goods specification information (to be described later) representing the contents of business transaction in which the member has purchased goods from the member store.

The use point number designation flag 62C is a flag showing whether or not the member store designates the number of points that the member can use per one business transaction in purchasing goods from the member store.

The member master use flag 62D is a flag showing whether or not the point in which a member, who intends to conduct a business transaction with the member store, is registered in the member master 64 as a member is a necessary condition for a business transaction. In this embodiment, it is assumed that the member master use flag 62D is set to a value designating that the acceptance of registration is a necessary condition for a business transaction.

The fraction processing flag 62E is a flag that designates whether a fraction, which is generated when a point to be assigned to the member is decided based on the point obtaining rate, should be rounded up, down, or off.

The point master 63 stores point conversion rate data 63A, a point obtaining condition flag 63B, obtaining rate data 63C and minimum purchase amount of money data 63D.

Point conversion rate data 63A is data representing an amount of cash obtained when a unit of the number of points (for example, one point) is converted to cash.

The point obtaining condition flag 63B is a flag showing whether or not a business transaction, in which a point is assigned to a member who purchases goods, should be limited to a business transaction more than the amount of money (minimum purchase amount of money) represented by minimum purchase amount of money data 63D.

Obtaining rate data 63C is data representing the aforementioned point obtaining rate.

Minimum purchase amount of money data 63D is data representing the aforementioned minimum purchase amount of money.

The member master 64 stores a member ID representing a member who can purchase goods by use of this point system. Further, the member master 64 stores a password assigned to authenticate the member indicated by this member ID to be associated with this member ID, a login ID, which is brought into a one-to-one correspondence with this password, the number of points (available points), which is actually assigned to this member, and member information representing the address and name of this member to be associated with one another.

The member ID, password and login ID stored in the member master 64 are added in accordance with processing (to be described later) that the processor 12A-j executes. Member information is also added or updated in accordance with processing (to be described later) that the processor 12A-j cxecutes.

The distribution destination master 65 stores data that identifies candidates of distribution destinations of goods purchased by the members.

The payment method master 66 stores a name of method that the member can take to pay for goods and a payment method ID that identifies various methods to be associated to each other. It should be noted that the payment method includes payment in cash, payment by cash or payment by a credit card, etc.

The prefecture name mater 67 stores data that identifies all prefectures in Japan and/or states in U.S.

and other administrative districts of arbitrary area.

Any terminals 2-1 to 2-n comprise a computer that performs client functions, and the like. Moreover, each of terminals 2-1 to 2-n includes an input device having a keyboard and a mouse, and a display device having a liquid crystal display. Each of terminals 2-1 to 2-n is assigned an address (for example, IP (Internet Protocol) address), which is unique to each terminal.

The terminals 2-1 to 2-n execute processing of the WWW browser, respectively. Namely, when URL is input according to the operator's operation, each of the terminals 2-1 to 2-n gains access to the device, which is accessible to data placed at the logical position shown by this URL, via the network N, and requests the said device to transmit the said data. Then, each terminal receives data transmitted by the said device according to this request via the network N, and displays an image represented by the received data on a display screen of the display device of each terminal.

The settlement server 3 comprises a sever computer that performs the function of WWW server, and carries out the operation to be described later. Also, the settlement server 3 stores a settlement point representing a property value and data representing a scratch number input page. More specifically, the settlement server 3 may have the same processor and storage as those that each of the Web servers 11-1 to 11-m.

Additionally, it is assumed that the conversion rate of the settlement point into cash is fixed to a constant value. Accordingly, the amount of money represented by the aforementioned point conversion rate data 63A also shows the conversion rate of the point assigned to the member into the settlement point.

The settlement point is brought into a one-to-one correspondence with a unique scratch number. The scratch number is distributed at cost by an operator of the settlement server 3 and the like in a state that the scratch member is printed on a scratch sheet and sealed thereon. Then, a person, who has purchased this scratch sheet, obtains a right to know the scratch number printed on the scratch sheet, so that a settlement point associated with this scratch number is assigned.

The scratch number input page includes a field for inputting the scratch number and a transmission button for instructing transmission of the scratch number. Additionally, it is assumed that data representing the scratch number input page is one in which the contents of the scratch number input page are described in, for example, a HTML format.

(Operation)

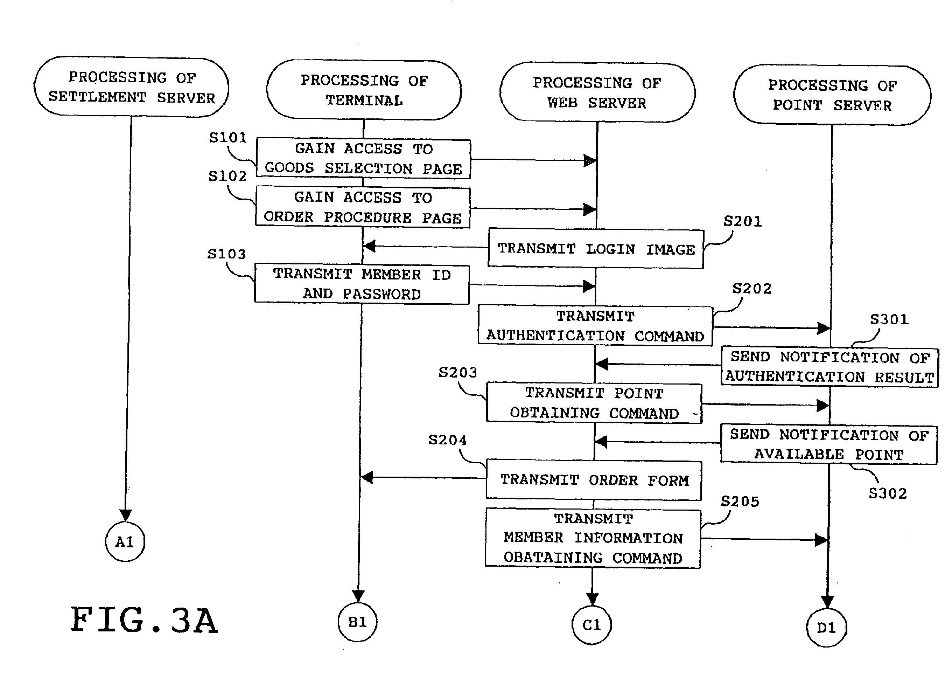

The operation of this point system will be next explained with reference to FIGS. 3A to 5B.

FIGS. 3A to 3D are flowcharts each illustrating processing, which is carried out at a goods purchasing time.

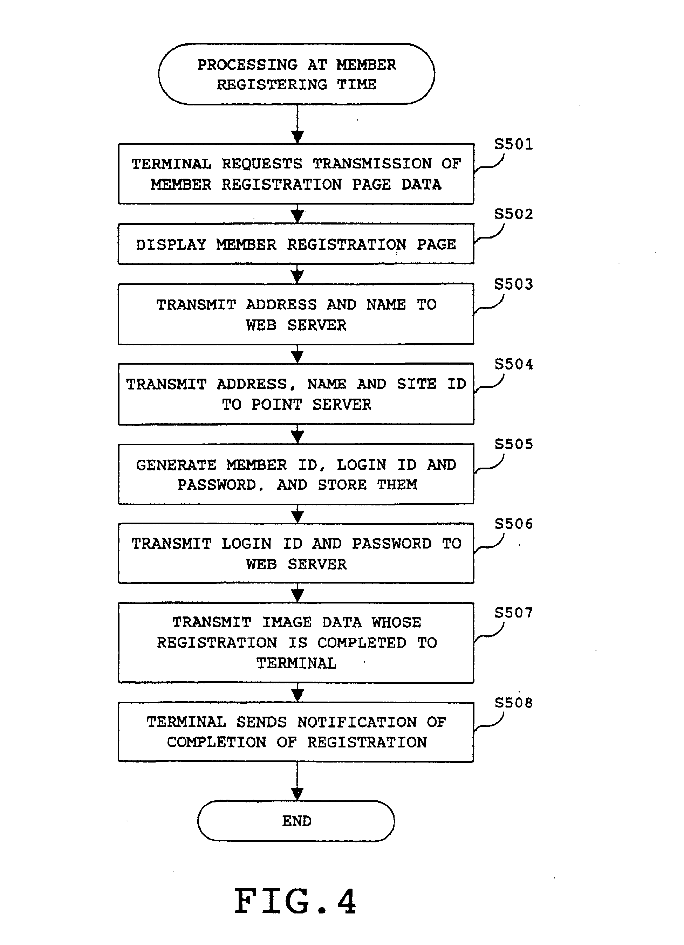

FIG. 4 is a flowchart illustrating processing, which is carried out at a member registering time.

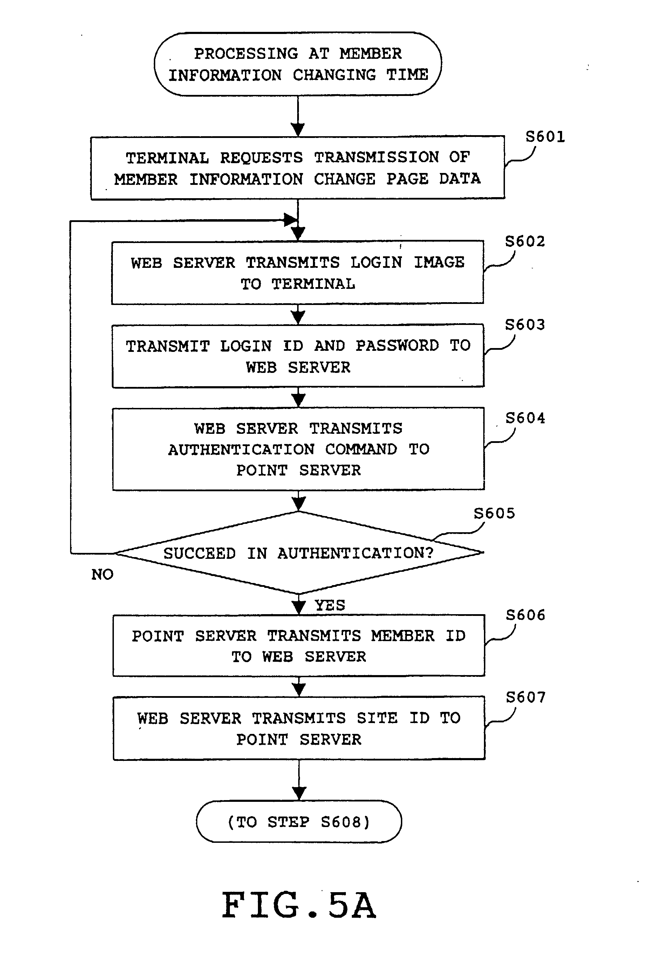

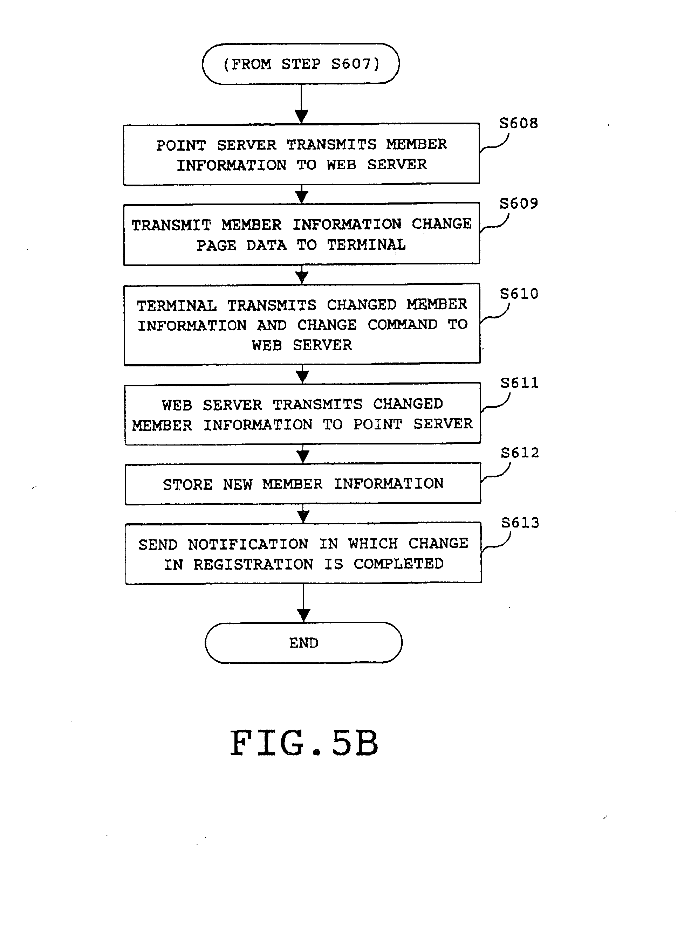

FIGS. 5A and 5B are flowcharts each illustrating processing, which is carried out at a member information changing time.

(Initial operation)

First, the processor 11A-j of the Web server 11-j of the member store site 1-j reads the goods order receiving program from the storage 11B-j and executes it. The processor 11A-j that has started processing for the goods order receiving program reads the WWW server program 51 from the storage 11B-j and executes it, and functions as a WWW server after starting the execution.

While, when processing for the point management program is started, the processor 12A-j reads the connection mode flag 62A of the control master 62 stored in the storage 12B-j. Then, the processor 12A-j confirms that the Web server 11-j and the point server 12-j are connected to each other via LAN based on a value of the read connection mode flag 62A. Thereafter, the processor 12A-j decides all data to be supplied to the Web server 11-j should be transmitted to the Web server 11-j via LAN.

The settlement server 3 executes the point settlement program. When processing for the point settlement program is started, the settlement server 3 waits for a command for requesting transmission of the scratch number input page to be transmitted to the settlement sever 3 via the network N.

(Processing at a goods purchasing time)

While, it is assumed that the operator of the terminal 2-k (k denotes an arbitrary integer of one or more and below n), which executes processing for the WWW browser operates the inputs device thereof to input URL of the goods selection CGI 52 of member store site 1-j. Then, the terminal 2-k gains access to the Web server 11-j and requests transmission of data representing the goods selection page (FIG. 3A, step S101).

The processor 11A-j of Web server 11-j generates data representing the goods selection page according to this request, and transmits it to the terminal 2-k. The terminal 2-k receives this data transmitted from the Web server 11-j, and displays the goods selection page.

The goods selection page represented by data that the Web server 11-j generates is a Web page, which is used to order goods from the Web server 11-j. This goods selection page includes, for example, a list of names and prices of goods that the operator of the member store site 1-j sells, a selection button, which is brought into a one-to-one correspondence with goods enumerated on this list, and an order hutton. The selection button is a button for selecting goods to be ordered.

The order button is a button for notifying the Web server 11-j that the selected goods are ordered.

Additionally, regarding data representing the goods selection page, any data may be used if it is one in which the contents of the goods selection page are described in, for example, a HTML format. The names and prices of goods may be prestored in the storage 11 B-j of the Web server 11-j by, for example, the operator of the member store site 1-j. Then, the processor 11A-j may read the names and prices from the storage 11B-j.

After that, it is assumed that the operator operates the mouse of the terminal 2-k, clicks the selection button of goods selection page and the order button sequentially. Resultantly, the terminal 2-k gains access to the Web server 11-j to transmit data representing goods associated with the clicked selection button thereto, and requests transmission of data representing an order procedure page to be described later (step S102). More specifically, the request for the transmission of data representing the order procedure page is carried out by supplying URL of the order procedure CGI 53 to the Web server 11-j.

When data representing goods and URL of the order procedure CGI 53 are supplied from the terminal 2-k, the processor 11A-j receives data representing goods and stores it. Moreover, the processor 11A-j gains access to the point server 12-j, and reads the value of the member master use flag 62D of the control master 62. Then, the processor 11A-j confirms that the value of the member master use flag 62D is set to a value designating that the acceptance of registration is a necessary condition for a business transaction. Then, the processor 11A-j generates data representing a Web page (login page) for authenticating the operator and transmits it to the terminal 2-k prior to generation and transmission of data representing the order procedure page (step S201).

This login page includes a field for inputting a login ID and a password and a transmission button for notifying the Web server 11-j of the login. Additionally, regarding data representing the login page, any data may he used if it is one in which the contents of the login page are described in, for example, a HTML format.

The terminal 2-k receives data transmitted by the Web server 11-j in step S201 and displays the login page. Then, the operator operates the input device of terminal 2-k to input the login ID and password into the field of login page and operates the mouse of terminal 2-k to click the transmission button included in the login page. Resultantly, the terminal 2-k transmits the input login ID and password to the Web server 11-j (step S103).

When receiving the login ID and password transmitted by the terminal 2-k in step S103, the processor 11 A-j transmits an authentication command for requesting authentication of the member, the received login ID and password, and the site ID unique to the Web server 11-j to the point server 12-j via LAN (step S202).

When receiving the authentication command, login ID and password, and site ID, the processor 12A-j of point server 12-j gains access to the member master 64 stored in the storage 12B-j. Then, the processor 12A-J determines whether or not the member ID associated with both the received login ID and password is included in the member master 64. Moreover, the processor 12A-j specifies the Web site shown by the received site ID by searching the site master 61. Then, the processor 12A-j transmits the determination result showing the presence or absence of the member ID to the Web server (namely, Web server 11-j) specified by searching (step S301).

More specifically, when determining that the said member ID is present in step S301, the processor 12A-j reads the said member ID and supplies it to the Web server 11-j so that a notification of success in authentication is sent. On the other hand, when determining that the said member ID is absent, the processor 12A-j notifies the Web server 11-j of failure in authentication of operator. It should be noted that the processor 11A-j of the Web server 11-j, which has received a notification of failure in authentication, returns processing to step S201.

Additionally, when transmitting data in response to the command supplied with the site ID after step S301, it is assumed that the point server 12-j performs the same processing as was carried out to specify the Web server in step S301. Resultantly, the point server 12-j specifics the Web site shown by the said site ID and transmits the said data to the specified Web site.

When receiving the member ID from the point server 12-j (namely, a notification of success in authentication is provided), the processor 11A-j transmits a point obtaining command for requesting a notification of points assigned to the member shown by the received member ID, the received member ID, and site ID of Web server 11-j to the point server 12-j (step S203).

When receiving the point obtaining command, member ID and site ID from the Web server 11-j, the processor 12A-j reads a current value (available points) relating to the number of points associated with the received member ID from the member master 64. Then, the processor 12A-j transmits the read available points to the Web server 11-j shown by the received site ID (step S302).

When receiving the available points from the point server 12-j, the processor 11A-j generates data representing the order procedure page and transmits it to the terminal 2-k (step S204).

The order procedure page represented by data that the Web server 11-j generates is a Web page for displaying the value of the available points received by the point server 12-j and name of goods (goods represented by data transmitted from the terminal 2-k in step S102) that the member orders. Moreover, the order procedure page includes a field for inputting order information representing the specific contents of order and a transmission button for instructing the Web server 11-j to transmit order information.

Additionally, order information includes the name of goods that the member orders and the quantities, the number of points appropriated for the payment of price, data identifying the distribution destination of goods, and data identifying the methods of payment. It should be noted that the name of goods, which the member orders, is not always input to the field of the order procedure page. Regarding data representing the order procedure page, any data may be used if it is one in which the contents of the order procedure page are described in, for example, a HTML format. Moreover, among data that forms order information, data that identifies the distribution destination of goods may be substantially the same as any one of data stored in the distribution destination master 65. Moreover, data that identifies the methods of payment may be substantially the same as any one of payment method IDs stored in the payment method master 66. Still moreover, data that identifies the distribution destination may include substantially the same data as any one of data stored in the prefecture name master 67 as one that specifies the prefecture to which the distribution destination belongs.

When transmitting data representing the order procedure page, the processor 11A-j of the Web server 11-j transmits the member ID sent to the processor 11A-j, a member information obtaining command for requesting transmission of member information of the member shown by the said member ID, and the site ID of the Web server 11-j to the point server 12-j (step S205).

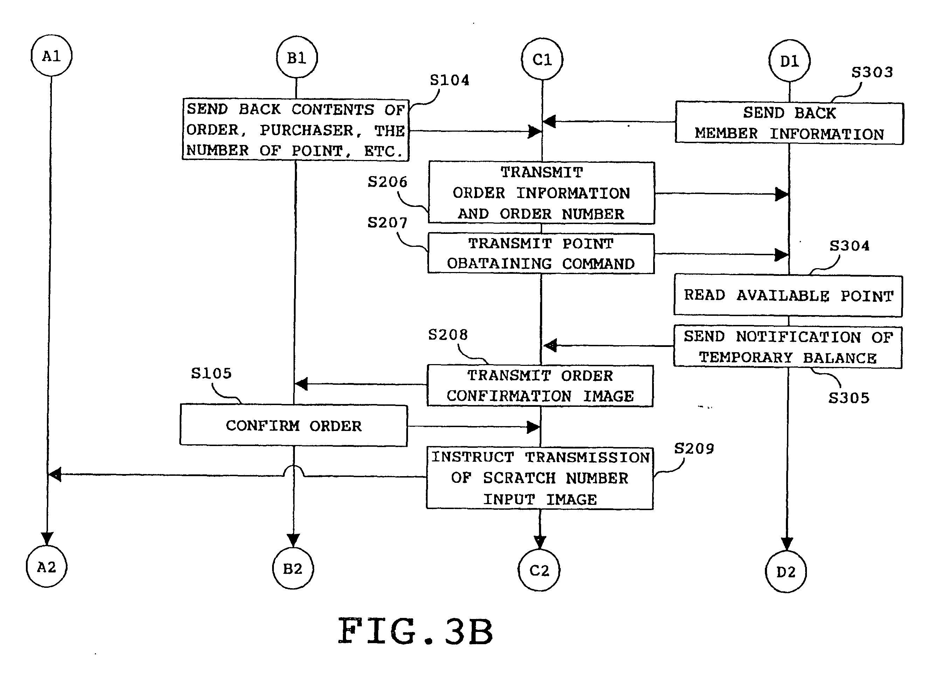

When receiving the member information obtaining command, member ID, site ID from the Web server 11-j, the processor 12A-j reads member information associated with the received member ID from the member master 64, and transmits it to the Web server 11-j (FIG. 3B, step S303).

On the other hand, when receiving data representing the order procedure page transmitted in step S204, the terminal 2-k displays the order procedure page in which the available point is input in advance. Then, when the operator operates the terminal 2-k, inputs order information into the field of the order procedure page, and clicks the transmission button of the order procedure page, the terminal 2-k transmits input order information to the Web server 11-j (step S104).

When receiving order information transmitted by the terminal 2-k, the processor 11A-j of Web server 11-j detects that the operator has ordered goods and generates an order number unique to this order. Also, the processor 11A-j adds the name of goods ordered by the member to received order information. Then, the processor 11A-j obtains the sum total of purchase prices of goods received in step S201 based on order information and unit price of the goods ordered by the operator. Then, the processor 11A-j transmits the obtained sum total of purchase prices of goods, generated order number and order information received from the terminal 2-k to the point server 12-j (step S206).

Moreover, the processor 11A-j retransmits the aforementioned point obtaining command, member ID transmitted to the processor 11A-j in step S301 and site ID of Web server 11-j to the point server 12-j (step S207).

When receiving the sum total of purchase prices of goods, order number and order information transmitted from the Web server 11-j in step S206, and the point obtaining command, member ID and site ID transmitted from the Web server 11-j in step S207, the processor 12A-j obtains time information output by a timer which the processor 12A-j comprises. Then, received order number and order information are temporarily stored in the storage 12B-j to be associated with time information obtained by the processor 12A-j. After that, the processor 12A-j reads the available point to be associated with the received member ID from the member master 64, and reads the control master 62 and point master 63 (step S304).

However, if the storage 12B-j temporarily stores a temporary balance of the available points to be described later, the processor 12A-j reads, in step S304, the temporary balance stored latest by the storage 12B-j instead of reading the number of points from the member master 64. Then, the read temporary balance is handled as an available point read from the member master 64 in step S305 to be described later.

Next, the processor 12A-j decides the number of points assigned to the member shown by the received member ID based on the sum total of purchase prices and order information, the contents of control master 62 and point master 63, and the read available point (or temporary balance) (step S305).

More specifically, the processor 12A-j carries out the following processing:

(1) There is a case in which the value of obtaining point management flag 62B shows the aforementioned condition (B1) and the point obtaining condition flag 63B shows the business transaction to which the point is assigned is limited to the transaction more than the minimum purchase amount of money. In this case, the processor 12A-j determines whether or not the sum total of purchase prices received reaches the minimum purchase amount of money shown by minimum purchase amount of money data 63D. Then, if it does not reach the minimum purchase amount of money, zero point is assigned (namely, no point is assigned).

(2) There is a case in which the value of obtaining point management flag 62B shows the aforementioned condition (B1) and the point obtaining condition flag 63B shows the business transaction to which the point is assigned is limited to the transaction more than the minimum purchase amount of money and the sum total of purchase prices received reaches the minimum purchase amount of money. In this case, the processor 12A-j determines whether or not the value of available point number designation flag 62C shows that the member store designates the maximum value of the available point per one business transaction.

Then, if the value of available point number designation flag 62C does not show that the member store designates the maximum value, the processor 12A-j decides the smaller value of two values as the number of points to be actually used in payment. Namely, two values refer to the number of points read from the member master 64 and the number of points, which is included in received member information and which the member wishes to use, respectively.

While, if the value of available point number designation flag 62C shows that the member store designates the maximum value, the processor 12A-j decides the smallest value of three values as the number of points to be actually used in payment. Namely, three values refer to the number of points read from the member master 64, the number of points, which the member wishes to use, and the maximum value of available point predetermined by each member store. Then, the processor 12A-j decides that a point equivalent to a value $p_+$ shown in the following expression is given.

$$p_+ = \{q - (p. *r.)\} * r_+ \qquad (1)$$

wherein the sum total of purchase prices received is q, the number of points actually used in payment is p., the conversion rate represented by point conversion rate data 63A included in the read point master 63 is r., and the point obtaining rate is $r_+$.

Moreover, among three processing, namely, rounding up, rounding down, rounding off, processing indicated by the value of fraction processing flag 62E is provided to the portion under decimal point of a right side value in expression (1).

Additionally, the maximum value of available points may be prestorcd in the storage 12B-j of the point server 12-j by, for example, the operator of member store site 1-j. In this case, the processor 12A-j may obtain the maximum value of available points by reading it from the storage 12B-j.

(3) There is a case in which the value of obtaining point management flag 62B shows the aforementioned condition (B1) and the point obtaining condition flag 63B does not show the business transaction to which the point is assigned is limited to the transaction more than the minimum purchase amount of money. In this case, the processor 12A-j also decides that a point equivalent to the foregoing value $p_+$ is given.

(4) A case in which the value of obtaining point management flag 62B shows the aforementioned condition (B2) will be described later.

Then, the processor 12A-j obtains the sum of the available point read from the member master 64 (or temporary balance) and the value of ($p_+$ - p_). Then, the processor 12A-j notifies the Web server 11-j of the obtain value of sum as the temporary balance of the aforementioned available point. Moreover, this temporary balance is temporarily stored in the storage 12B-j to be associated with the order number received in step S206 (step S305). Additionally, in step S305, processing for updating the number of points stored in the member master 64 to the obtained value of sum is not carried out.

When receiving a notification of the aforementioned temporary balance obtained in step S305 from the point server 12-j, the processor 11A-j of Web server 11-j generates order information transmitted by the terminal 2-k in step S104 and data representing a Web page (order confirmation page) that displays an order number generated by the processor 11 A in step S206. Then, the processor 11A-j transmits the generated result to the terminal 2-k (step S208). Additionally, it is assumed that the order confirmation page includes a confirmation button in addition to order information and order number.

I The terminal 2-k receives data transmitted in step S208, and displays the order confirmation page shown by received data. Then, when the operator operates the terminal 2-k and clicks the confirmation button included in the order confirmation page, the terminal 2-k notifies the Web server 11-j that the order has been confirmed (step S105).

When receiving the notification sent in step S105, the processor 11A-j gains access to the settlement server 3. After that, a command that data representing a scratch number input page is transmitted to the terminal 2-k is sent to the settlement server 3 (step S209).

Moreover, in step S209, the processor 11A-j transmits an address of terminal 2-k, settlement amount, and order number generated in step S206 to the settlement server 3 together with this command. The settlement amount is equivalent to the value of {q - (p. * r.)}.

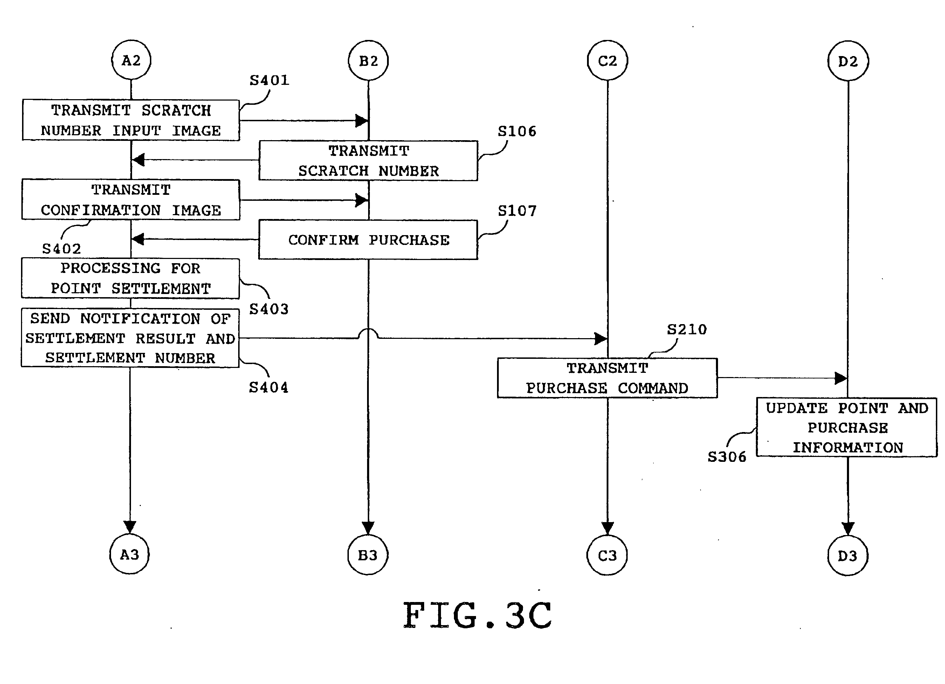

When receiving the command, address, settlement amount and order number transmitted from the Web server 11-j in step S209, the settlement server 3 reads data representing the scratch number input page and transmits it to the terminal 2-k (FIG. 3C, step S401).

The terminal 2-k receives data transmitted from the settlement server 3 in step S401 and displays the scratch number input page. Then, the operator operates the terminal 2-k, inputs the scratch number described in the scratch sheet that the member possesses into the field included in the scratch number input page, and clicks the transmission button of scratch number input page. Resultantly, the terminal 2-k transmits the input scratch number to the settlement server 3 (step S106).

The settlement server 3 that has received the scratch number generates data representing the Web page (settlement confirmation page), which displays the scratch number received from the terminal 2-k and the settlement amount received from the Web server 11-j, and transmits it to the terminal 2-k (step S402). The terminal 2-k receives this data, and displays the settlement confirmation page.

The settlement confirmation page a confirmation button for notifying the settlement server 3 that settlement is confirmed in addition to the scratch number and the settlement amount. Additionally, data representing the settlement confirmation page comprises, for example, data in which the contents of settlement confirmation data arc described in a HTML format.

After that, when the operator operates the terminal 2-k and clicks the confirmation button included in the settlement confirmation page, the terminal 2-k transmits the settlement server 3 a notification that settlement is confirmed (step S107).

The settlement server 3 that has received the notification of settlement carries out settlement using settlement points associated with this scratch number according to the known method (step S403). Namely, the settlement server 3 updates the said settlement points to be reduced by an amount corresponding to the settlement amount of money transmitted from the Web server 11-j in step S209, while decides that the said settlement amount of money should be paid to the operator of member store site 1-j.

Sequentially, the settlement server 3 notifies the Web server 11-j that settlement has been normally completed. Moreover, the settlement server 3 transmits the order number received in step S401 to the Web server 11-j (step S404).

When receiving the order number and the notification that settlement has been normally completed, the Web server 11-j sends the point server 12-j a purchase command for confirming the update of member's points subjected to settlement, the member ID sent to the Web server 11-j in step S301, settlement amount of money, the order number generated in step S206 and received in step S404, and the site ID of Web server 11-j (step S210).

When receiving the purchase command, order number, member ID and site ID, the processor 12A-j of point server 12-j updates the available points of the member who performed settlement stored in the member master 64 (namely, member shown by the received ID) to a value equivalent to the temporary balance, which was obtained in step S305 and temporarily stored (step S306). If a plurality of temporarily balances is stored, the available points are updated to a value equivalent to the temporary balance associated with the order number received in step S210. If a plurality of temporarily balances is stored, there can be considered a case in which the member transmits order information and the order number to the terminal 2-k a plurality of times.

Moreover, in step S306, the processor 12A-j newly stores the order number received in step S210 and order information received in step S304 and temporary stored into the member master 64 to be associated with this member ID as purchase information shown by the member ID received in step S210.

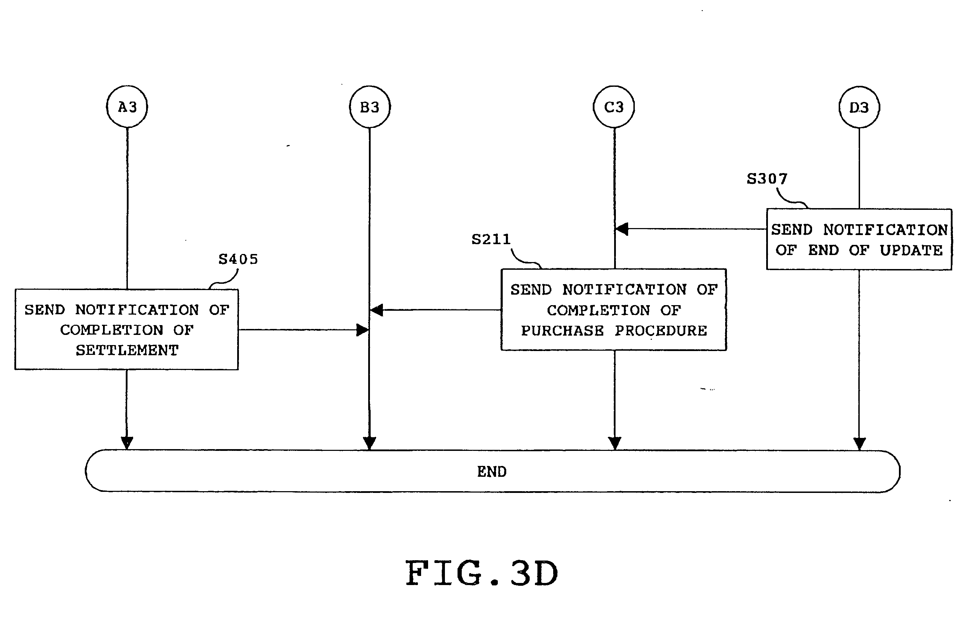

Next, the processor 12A-j notifies the Web server 11-j that the update of the number of points has been completed (FIG. 3D, step S307).

When receiving the notification in which the update of the number of points has been completed, the processor 11A-j of Web server 11-j notifies the terminal 2-k of the completion of purchase procedure of goods (step S211).

While, the settlement server 3, which notified the Web server 11-j of the completion of settlement, notifies the terminal 2-k that settlement has been normally completed (step S405).

By processing in the aforementioned steps S101 to S107, S201 to S211, S301 to 307 and S401 to S405, the order of goods purchase made by the member is received and payment is carried out using the settlement points and the points stored by the point server. Then, the number of points determined depending on the amount of payment made by this member is newly assigned to this member.

(Processing at a member registering time)

When wishing to newly register the member, the operator of terminal 2-k operates the input device of terminal 2-k and inputs the URL of member registration page data 54 of the member store site 1-j. Then, the terminal 2-k requests the Web server 11-j to transmit member registration page data 54 (FIG. 4, step S501).

The processor 11A-j reads member registration page data 54 from the storage 11B-j and transmits it to the terminal 2-k. The terminal 2-k receives member registration page data 54 and displays the member registration page (step S502).

Then, the operator operates the input device of terminal 2-k and inputs a member and an address of a person who intends to be a member to a field for registration. The operator further operates the mouse of terminal 2-k and clicks the transmission button for member registration page. Resultantly, the terminal 2-k transmits the name and address input to the field for registration and transmits them to the Web server 11-j (step S503).

When receiving the name and address from the terminal 2-k, the processor 11A-j of Web server 11-j transmits this name and adders and the site ID of Web server 11-j to the point server 12A-j (step S504).

When receiving the name and address, the processor 12A-j of point server 12-j generates a member ID, which is unique to a person shown by the received name and address, a login ID and a password of the person, and stores them to the member master 64 (step S505).

Then, the processor 12A-j transmits data representing the completion of registration and newly generated login ID and password to the Web server 1-j (step S506). The processor 11A-j of Web server 11-j transmits data, which represents an image showing the completion of registration, to the terminal 2-k (step S507). It should be noted that this image includes the login ID and password newly stored in the member master 64.

The terminal 2-k receives this data and displays the image represented by this data. Resultantly, the login ID and password are sent to the operator (step S508).

As a result of processing in the aforementioned steps S501 to S508, the person, who is specified by this name and address, is newly registered as a member. Moreover, the notification of login ID and password to authenticate the person is provided to the operator of terminal 2-k. The name and address newly stored in the member master 64 are handled as member information of the newly registered member.

(Processing at a member registration changing time)

When wishing to change member information, the operator of terminal 2-k operates the input device of terminal 2-k and inputs URL of member information change page data 55 of member store site 1-j. Resultantly, the terminal 2-k requests the Web server 11-j to transmit member information change page data 55 (FIG. 5A, step S601).

When URL of member information change page data 55 is supplied from the terminal 2-k, the processor 11A-j performs processing of step S201 (step S602). Then, when the terminal 2-k performs processing of step S103 so as to transmit the login ID and password of the member whose member information should be changed to the Web server 11-j (step S603), the processor 11 A-j performs processing of step S202 (step S604).

The processor 12A-j of point server 12-j carries out substantially the same processing as that of step S301 so as to authenticate the member whose member information should be changed (step S605). Then, in a case of failure in authentication, the processor 12A-j returns processing to step S602, while, in a case of succeed in authentication, the processor 12A-j supplies the member ID of the said member to the Web server 11-j (step S606).

The processor 11A-j of Web server 11-j transmits the member ID received in step S606, the same member information obtaining command as transmitted in step S205 and the site ID of Web server 11-j to the point server 12-j (step S607).

In response to this member information obtaining command, the processor 12A-j reads member information, which is associated with the member ID received in step S606, from the member master 64. Then, the processor 12A-j transmits read member information to the Web server 11-j (FIG. 5B, step S608).

When receiving member information transmitted in step S608, the processor 11A-j reads member information change page data 55 from the storage 11B-j. Then, the processor 11A-j changes read member information change page data 55 to show an image in which member information received form the point server 12-j is input in advance, and transmits it to the terminal 2-k (step S609). The terminal 2-k receives member information change page data 55 transmitted in step S609 and displays a member information change page in which member information is already input. After that, it is assumed that the operator operates the terminal 2-k, rewrites input member information and clicks the transmission button of member information change page. Resultantly, the terminal 2-k transmits rewritten member information input in the field for registration and a change command for requesting a change in member information to the Web server 11-j (step S610).

When new member information and the change command are supplied from the terminal 2-k, the processor 11-A of Web server 11-j transmits this member information, site ID of Web server 11-j and member ID received in step S606 to the point server 12-j (step S611).

When receiving the member ID and new member information, the processor 12A-j of Web server 12-j erases one that is associated with the received member ID, from member information stored in the member master 64. Then, the processor 12A-j stores received new member information in the member master 64 to be associated with this member ID (step S612).

After new member information is stored in the member master 64, the processor 12A-j notifies the Web server 11-j of the completion of change in registration. The processor 11A-j of Web server 11-j transmits the terminal 2-k data representing an image that shows the completion in the change in registration. The terminal 2-k receives this data and displays the image represented by this data. As a result, the operator is notified of the completion in the change in registration (step S613).

As a result of processing in the aforementioned step S601 to S613, member information of the authenticated member is changed in accordance with the operation done by the operator of the terminal.

(Processing at an error generating time)

The processor 12A-j of point server 12-j performs the aforementioned processing while monitoring time required for settlement. More specifically, first, the processor 12A-j temporarily stores the order number and order information received from the Web server 11-j in the storage 12B-j to be associated with time information. The processor 12A-j monitors time that has elapsed since the order number and order information were temporarily stored based on time information, which is continuously output from the processor 12A-j and time information, which is temporarily stored in the storage 12B-j. However, when this order number is transmitted from the Web server 11-j together with notification that settlement has been normally completed, the processor 12A-j stops monitoring.

Then, when detecting that a fixed time has been elapsed with no transmission of notification that the order number and settlement are normally completed from the Web server 11-j, the processor 12A-j erases the said order number and the said order information temporarily stored in the storage 12B-j.

For this reason, even if the notification that the order number and settlement are normally completed is transmitted from the Web server 11-j, the order number and order information, which are once erased, are not stored in the member master 64.

Additionally, the structure of this point system is not limited to the above.

For example, the point that this point system gives to the member may be predetermined for each of goods that the member purchases.

In this case, for example, the Web server 11-j may prestore goods specification information including data that designates the point to be assigned to the member for each of goods. Then, the Web server 11-j may specify the point designated in connection with goods that the member orders based on this goods specification information, and notify the point server 12-j of the result.

Or, for example, the point server 12-j may prestore goods specification information. In this case, the point server 12-j may specify goods that the member orders based on order information received from the Web server 11-j, and specify the point designated in connection with the specified goods based on this goods specification information.

Additionally, it is assumed that the value of obtaining point management flag 62B is preset to a value representing the foregoing condition (B2) in the case where the point assigned to the member is decided based on goods specification information.

Moreover, when receiving the notification of failure in authentication in step S301, the Web server 11-j may perform processing of step S501 instead of returning processing to step S201, and this point system may perform processing at the member registering lime afterwards.

Still moreover, this point system does not necessarily require the registration of member as a necessary connection for business transactions. In the case where this point system permits the business transaction regardless of whether the registration of member is made or not, the manage of point server 12-j presets the value of member master use flag 62D to a value indicating that the business transaction is permitted regardless of whether the registration of member is made or not.

In this case, when confirming that the value of member master use flag 62D is preset to a value indicating that the business transaction is permitted regardless of whether the registration of member is made or not, the processor 11A-j of Web sever 11-j may move processing to step S203 immediately.

Moreover, the Web server and point server may be connected to each other via the network composed of WWW and the like.

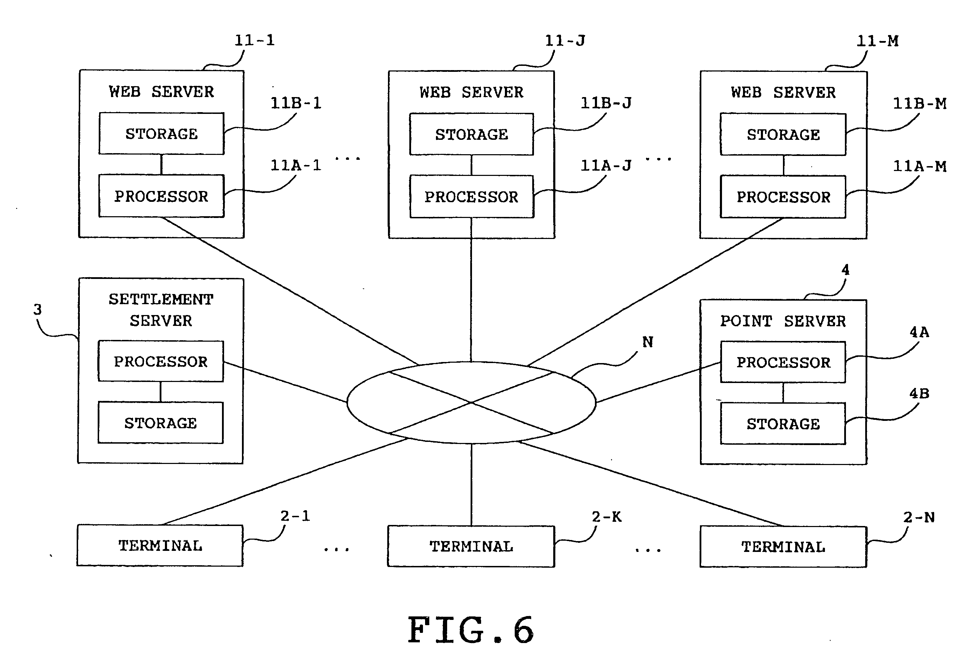

In this case, this point system may comprise the point server connected to the network N in place of the point servers 12-1 to 12-m as illustrated in, for example, FIG. 6.

Additionally, it is assumed that the point server 4 has substantially the same physical structure as that of the point server 12-j of FIG. 1 excepting the point that the point server 4 is directly connected to the network N.

Namely, as illustrated in, for example, FIG. 6, the point server 4 comprises processor 4A and storage 4B connected to each other. The processor 4A has substantially the same structure as that of the processor 12A-j of point server 12-j. The storage 4B has substantially the same structure as that of the storage 12B-j. The storage 4B stores substantially the same data as data stored by the storage 12B-1 to 12B-m.

However, if this point system has the structure as illustrated in FIG. 6, the site master 61, which is stored in the storage 4B, stores m number of site IDs, which identify the Web servers 11-1 to 11-m respectively, in order to identify the Web server accessible to the site master 61. Moreover, the value of connection mode flag 62A is set to a value indicating that the Web server 11-j is connected to the point server 4 via WWW.

Then, the processor 4A starts processing for a point management program and reads the connection mode flag 62A from the storage 4B. When confirming that the Web server 11-j and point server 4 are connected to each other via WWW, the processor 4A decides that all data to be supplied to Web servers 11-1 to 11-m should be sent thereto via WWW.

Moreover, in the case where this point system has the structure as illustrated in FIG. 6, the terminal 2-k may supply the login ID and password input by the operator to the point server 4 via no Web server 11-1 to 11-m in the processing at the goods purchasing time. In this case, the Web server 11-1 to 11-m do not obtain the login ID and password. This prevents the login ID and password from being leaked via the Web servers 11-1 to 11-m so as to improve the safety of authentication of member.

As a specific method for supplying the login ID and password from the terminal 2-k to the point server 4 via no Web servers 11-1 to 11-m, for example, a method in which the point server 4 stores login CGI can be considered.

In this case, when the terminal 2-k performs processing of step S102, the processor 11A-j of Web server 11-j transfers URL of login CGI, address of terminal 2-k and site ID of Web server 11-j to the point server 4 via the network N according to control of the order procedure CGI 53, instead of transmitting data representing the login page. When URL of login CGI, address of terminal 2-k and site ID of Web server 11-j are transferred thereto, the point server 4 confirms that the value of the member master use flag 62D is set to a value designating that the acceptance of registration is a necessary condition for a business transaction according to control of login CGI. After confirmation, the point server 4 generates data representing a login page and transmits it to the terminal 2-k. The terminal 2-k receives this data from the point server 4 and displays the login page similar to the aforementioned step S103. When the operator inputs the login ID and password and clicks the transmission button, the terminal 2-k transmits the input login ID and password to the point server 4.

The point server 4 carries out substantially the same processing as that of step S301 using the login ID and password received from the terminal 2-k and the site ID received from the Web server 11-j. Then, the point server 4 transmits the determination result showing the presence or absence of member ID to the Web server specified by searching the site master 61 (namely, Web server 11-j).

Then, the Web server 11-j may perform processing of step S203 and the following, the point server 4 may perform processing of step S302 and the following, the terminal 2-k may perform processing of step S104 and the following, and the settlement server 3 may perform processing of step S401 and the following. In this case, at the time of failure in authentication, the point server 4 may retransmit, for example, data representing the login page to the terminal 2-k instead of transmitting a notification of failure in authentication to the Web Server 11-j.

Other method may be considered as a method for supplying the login ID and password to the point server 4 from the terminal 2-k via no Web servers 11-1 to 11-m. For example, the terminal 2-k may transmit the address of terminal 2-k, URL of login CGI, and site ID of Web server accessed in step S101 to the point server 4 instead of performing processing of step S102. In this case, the point server 4 also receives the login ID and password from the terminal 2-k according to control of login CGI. Then, the point server 4 carries out substantially the same processing as that of step S301 using the login ID and password, and site ID of Web server 11-j received from the terminal 2-k. After that, the point server 4 transmits the determination result showing the presence or absence of member ID to the Web server 11-j specified by searching the site master 61. Also, in this case, the point server 4 may retransmit data representing the login page to the terminal 2-k instead of transmitting a notification of failure in authentication to the Web server 11-j.

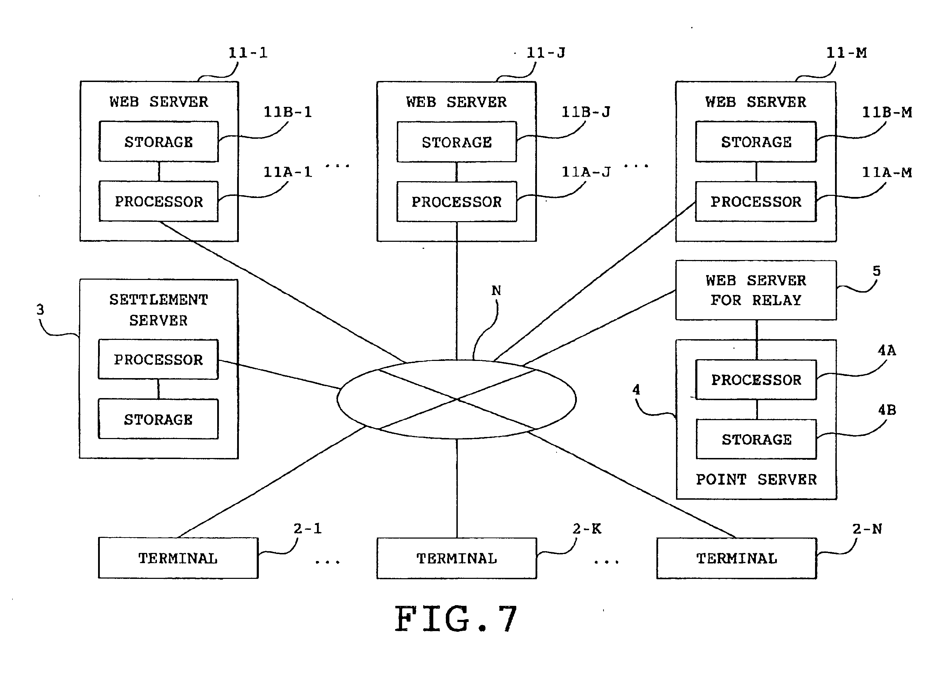

Moreover, the point system having the structure of FIG. 6 may further comprise a Web server 5 for relay connected to the network N as illustrated in FIG. 7. In this case, as illustrated, the point server 4 may be connected to the Web server 5 over a dedicated communications line and the like instead of being connected to the network N. The Web server 5 for relay may have substantially the same physical structure as that of the Web server 11-j. It is assumed that the point server 4 performs data transmission and reception between the point server 4 and Web server 11-j via the Web server 5 for relay.

In this case, the storage area of storage that the point server comprises may be formed such that no direct access thereto via the network N is carried out. By providing the structure in which substantially no direct access to the storage area of the point server 4 via the network N is carried out, this point system can surely prevent the leakage of the login ID and password due to access to the point server 4 from the external section via the network N.

In the case where this point system has the structure as illustrated in FIG. 7, the terminal 2-k may supply the login ID and password input by the operator to the point server 4 via the Web server 5 for relay in processing at the goods purchasing time.

More specifically, for example, the Web server 5 may store the login CGI. In this case, the terminal 2-k transmits the address of terminal 2-k, URL of login CGI, site ID of Web server accessed in step S101 to the Web server 5 instead of carrying out processing of step S102.

Then, in this case, the Web server 5 gain access to the point server 4 according to control of login CGI stored in the Web server 5, and confirms that the value of the member master use flag 62D is set to a value designating that the acceptance of registration is a necessary condition for a business transaction. After that, the Web server 5 generates data and transmits it to the terminal 2-k. The terminal 2-k receives this data from the Web server 5 and displays the login page similar to the aforementioned step S103. When the operator inputs the login ID and password and clicks the transmission button, the terminal 2-k transmits the input login ID and password to the Web server 5.

The Web server 5 for relay transfers the login ID and password received from the terminal 2-k and the site ID to the point server 4. The point sever 4 carries out substantially the same processing as that of step S301 using the transferred login ID, password and site ID. After that, the point server 4 transfers data, which represents the determination result showing the presence or absence of member ID, and data, which represents the search result of site master 61, to the Web server 5.

When data, which represents the determination result showing the presence or absence of member ID, and data, which represents the search result of site master 61, are transferred thereto, the Web server 5 sends a notification of failure or success in authentication to the Web server shown by the search result. This notification may be carried out by transmitting data, which represents the determination result showing the presence or absence of member ID, to this Web site. Additionally, this notification is performed according to control of, for example, login CGI.

Then, the Web server 11-j may perform processing of step S203 and the following, the point server 4 may perform processing of step S302 and the following, the terminal 2-k may perform processing of step S104 and the following, and the settlement server 3 may perform processing of step S401 and the following. In this case, it is assumed that the point server 4 performs data transmission and reception between the point server 4 and Web server 11-j via the Web server 5 for relay. Additionally, when the determination result, showing the presence or absence of member ID, transferred from the point server 4 indicates failure in authentication, the Web server 5 for relay may retransmit, for example, data representing the login page to the terminal 2-k instead of transmitting a notification of failure in authentication to the Web server 11-j.

Though the embodiment of the present invention has been thus explained, the electronic settlement apparatus of the present invention can be implemented using not only the dedicated system but also the general computer system.

For example, programs for executing the operations of the aforementioned Web servers 11-1 to 11-m, point servers 12-1 to 12-m (or point server 4) and terminal 2-1 to 2-n are installed onto a plurality of computers, each having a DSU and terminal adapter, connected to each other over a communications line, from the storage medium (CD-ROM, magnetic tape, etc.) having the above programs stored. This makes it possible to structure the point system that executes the above processing.

Moreover, for example, these programs may be placed on a bulletin board system (BBS) of the communications line and delivered over the communications circuit. Furthermore, a carrier wave is modulated by the signal representing these programs, and the obtained modulated wave is transmitted. Then, the device that receives the modulated wave may demodulate the modulated wave to restore these programs.

Then, the program is started up and executed similar to the other application program under control OS, making it possible to execute the above processing.

Additionally, in the case where OS shares the part of processing or OS partially forms one of the configuration components of the present invention, the program excepting the part may be stored onto the storage medium. In this case, according to the present invention, each function that is executed by the computer and the program for executing the steps are stored onto the storage medium.

As explained above, according to the present invention, there can be implemented the electronic settlement apparatus and electronic settlement method for providing an additional value to clients who perform electronic settlement.

Moreover, according to the present invention, there can be implemented the electronic settlement apparatus and electronic settlement method for preventing an illegal transaction exceeding the balance.

Various embodiments and changes may be made thereunto without departing from the broad spirit and scope of the invention. The above-described embodiment is intended to illustrate the present invention, not to limit the scope of the present invention. The scope of the present invention is shown by the attached claims rather than the embodiment. Various modifications made within the meaning of an equivalent of the claims of the invention and within the claims are to be regarded to be in the scope of the present invention.

This application is based on Japanese Patent Application No. 2000-400344 filed on December 28, 2000 and including specification, claims, drawings and summary. The disclosure of the above Japanese Patent Application is incorporated herein by reference in its entirety.

## Claims

1. An electronic settlement apparatus, **characterized by** comprising a structure (1-1 to 1-m, 4) for providing an additional value to those who perform electronic settlement and/or preventing an illegal transaction.

2. The electronic settlement apparatus according to claim 1, **characterized by** comprising:

   memory (12B-1 to 12B-m, 4B) for storing discount points representing a property value to be associated with a user to which the said discount points are assigned; and
   a processor (12A-1 to 12A-m, 4A),

   wherein said processor obtains goods data that designates goods and use point data that designates an amount to be appropriated for the price of the said goods, decides the discount points to be newly assigned to said user based on said obtained goods data, and when settlement data, which represents that settlement of purchase of said goods is completed, is supplied, said processor decides that goods represented by said goods data is goods that said user will purchase and updates said discount points stored in said memory to be varied by an amount corresponding to a value obtained by subtracting the value of the discount points designated by said use point data from the value of the discount points decided to be newly assigned to said user.

3. The electronic settlement apparatus according to claim 2, **characterized by** further comprising a receiving server (11-1 to 11-m) for obtaining said goods data and said use point data from an external section via a network so as to be transferred to said processor, wherein said processor obtains said goods data and said user point data transferred from said receiving server.

4. The electronic settlement apparatus according to claim 2, **characterized in that** said memory stores user identification data that identifies the user to which said discount points are assigned to be associated with said discount points, and a password associated with the said user identification data; and said processor obtains information and password representing said user; determines whether or not said memory stores said user identification data that identifies the user represented by said obtained information and said obtained password to be associated with each other; and stops obtaining said goods data or said user point data when determining that said memory stores neither user identification data nor said password to be associated with each other.

5. The electronic settlement apparatus according to claim 4, charactcrized in that said processor obtains information, which is supplied from an external section and which represents the user, in accordance with an instruction supplied from the external section, and generates said user identification data that identifies the user represented by obtained information and said password associated with the said user identification data, and store said user identification data and password in said memory.

6. The electronic settlement apparatus according to claim 4, **characterized in that** said memory stores user information unique to the user identified by said corresponding user identification data to be associated with said user identification data.

7. The electronic settlement apparatus according to claim 6, **characterized in that** when said processor determines that said user identification data that identifies the user represented by said information obtained by the processor and said password obtained by the processor arc stored in said memory to be associated with each other, said processor updates said user information stored in said memory to be associated with the said user identification data to user information supplied from the external section.

8. The electronic settlement apparatus according to claim 2, **characterized in that** when said processor determines whether or not said settlement data is supplied to the processor until a predetermined time has elapsed after obtaining goods data, and when said processor determines that no settlement data is supplied thereto, said processor abandons the obtained corresponding goods data.

9. The electronic settlement apparatus according to claim 2, **characterized by** further comprising a settlement server (3), wherein said settlement server stores settlement points representing a property value to be associated with identification data unique to the said settlement points; determines whether or not said processor obtains said goods data and said use point data; obtains said identification data from the external section when it is determined that said processor obtains said goods data and said use point data; decides that a difference between an amount of settlement points corresponding to the price of goods represented by said goods data and an amount of settlement points corresponding to the discount points represented by said use point data is appropriated for the price of the said goods; and supplies said settlement data to said processor when the settlement points associated with said obtained identification data are more than said difference.

10. The electronic settlement apparatus according to claim 2, **characterized in that** said memory stores conversion rate data representing a conversion rate between said discount points and said settlement points, and said processor specifies the amount of settlement points corresponding to the discount points represented by said use point data according to the conversion rate represented by said conversion rate data.

11. The electronic settlement apparatus according to claim 2, **characterized in that** said processor determines whether or not the price of goods represented by said goods data reaches a predetermined minimum purchase amount, and decides that no discount point is assigned to said user when determining that the price of goods does not reach the predetermined minimum purchase amount.

12. The electronic settlement apparatus according to claim 2, **characterized in that** said processor determines whether or not the discount points represented by the use point data obtained by the processor are more than predetermined available points, and handles the said available points as discount points.

13. The electronic settlement apparatus according to claim 3, characlerized in that said receiving server supplies goods data and use point data obtained by said receiving server to said processor via a LAN (Local Area Network); and said processor decides discount points to be newly assigned to said user based on the price of said goods data supplied from said receiving server, and updates said discount points stored in said memory to be varied by an amount corresponding to a value obtained by subtracting the discount points designated by use point data supplied from said receiving server from the discount points decided by said processor.

14. The electronic settlement apparatus according to claim 3, **characterized in that** said receiving server supplies goods data and use point data obtained by said receiving server to said processor via a WWW (World Wide Web); and said processor decides discount points to be newly assigned to said user based on the price of said goods data supplied from said receiving server, and updates said discount points stored in said memory to be varied by an amount corresponding to a value obtained by subtracting the discount points designated by use point data supplied from said receiving server from the discount points decided by said processor.

15. The electronic settlement apparatus according to claim 14, **characterized in that** said receiving server generates order identification data unique to each goods data obtained by said receiving server so as to be supplied to said processor, and supplies reception identification data unique to said receiving server to said processor to be associated with said goods data.

16. The electronic settlement apparatus according to claim 2, **characterized in that** said memory stores assignment rate data that designates discount points to be newly assigned to said user per unit quantity of the price of said goods; and said processor decides a value obtained by multiplying the price of goods represented by goods data obtained by the processor by the discount points designated by said assignment rate data as discount points to be newly assigned to said user.

17. The electronic settlement apparatus according to claim 2, **characterized in that** said goods data includes point designation information that designates discount points to he assigned to a person who purchases goods represented by the said goods data; and said processor decides the discount points represented by said point designation information included in said goods data obtained by said processor as discount points to be newly assigned to said user.

18. The electronic settlement apparatus according to claim 2, **characterized in that** said processor generates temporary balance data representing a result obtained by varying the discount points stored in said memory by amount corresponding to a value obtained by subtracting the discount points designated by use point data from the discount points decided to be newly assigned to said user; handles a value represented by said temporary balance data generated latest as discount points stored in said memory until said settlement data is supplied from the external section; and updates said discount points stored in said memory according to the result represented by said temporary balance data when said settlement data is supplied from the external section.

19. The electronic settlement apparatus according to claim 1, **characterized by** comprising:

    a receiving server (11-1 to 11-m) for obtaining goods data that designates goods and use point data that designates an amount to be appropriated for the price of the said goods in the discount points representing a property value from an external section via a network;
    memory (12B-1 to 12B-m, 4B) for storing said discount points to be associated with a user to which the said discount points are assigned; and
    a processor (12A-1 to 12A-m, 4A),

    wherein said memory further stores user identification data that identifies the user to which the said discount points are assigned to be associated with said discount points, and a password associated with the said user identification data; and said processor obtains information and password representing said user from an external section; determines whether or not said memory stores said user identification data that identifies the user represented by said obtained information and said obtained password to he associated with each other; obtains goods data and use point data obtained by said receiving server from said receiving server via said network when determining that said memory stores said user identification data and said password to be associated with each other; prevents said receiving server from obtaining said goods data or said user point data when determining that said memory stores neither user identification data nor said password to be associated with each other; decides discount points to be newly assigned to said user based on the said goods data obtained by said receiving server; decides that goods represented by goods data obtained from said receiving server is handled as goods that said user will purchase when settlement data representing that settlement of the purchase of said goods is completed is supplied from the external section; and updates said discount points stored by said memory to be varied by an amount corresponding to a difference between the discount points determined to be newly assigned to said user and the discount points designated by the use point data obtained from said receiving server.

**20.** An electronic settlement method, **characterized by** comprising the steps of:

storing discount points representing a property value to be associated with a user to which the said discount points are assigned;
obtaining goods data that designates goods and use point data that designates an amount to be appropriated for the price of the said goods in said discount points from an external section via a network;
deciding a discount points to be newly assigned to said user based on said obtained goods data;
deciding that goods represented by goods data obtained is handled as goods that said user will purchase when settlement data representing that settlement of the purchase of said goods is completed is supplied from the external section; and
updating said discount points stored to be varied by an amount corresponding to a value obtained by subtracting the value of the discount points designated by said use point data from the value of the discount points decided to be newly assigned to said user.

**21.** A computer-program, **characterized by** causing a computer to perform functions of:

storing discount points representing a property value to be associated with a user to which the said discount points are assigned;
obtaining goods data that designates goods and use point data that designates an amount to be appropriated for the price of the said goods in said discount points from an external section via a network;
deciding discount points to be newly assigned to said user based on said obtained goods data;
deciding that goods represented by goods data obtained is handled as goods that said user will purchase when settlement data representing that settlement of the purchase of said goods is completed is supplied from the external section; and
updating said discount points stored to be varied by an amount corresponding to a value obtained by subtracting the value of the discount points designated by said use point data from the value of the discount points decided to be newly assigned to said user.

FIG. 1

STORAGE

64 — MEMBER MASTER

SITE MASTER — 61

65 — DISTRIBUTION DESTINATION MASTER

CONTROL MASTER — 62

62A 62B 62C 62D 62E

66 — PAYMENT METHOD MASTER

67 — PREFECTURE NAME MASTER

POINT MASTER — 63

63A 63B 63C 63D

POINT MANAGEMENT PROGRAM

12B-J PROCESSOR 12A-J

12-J 12-J

(TO NETWORK N)

PROCESSOR 11A-J

11B-J

54 — MEMBER REGISTRATION PAGE DATA

WWW SERVER PROGRAM — 51

55 — MEMBER INFORMATION CHANGE PAGE DATA

GOODS SELECTION CGI — 52

ORDER PROCEDURE CGI — 53

GOODS ORDER RECEIVING PROGRAM

STORAGE

# FIG.2

FIG. 3A

Processing columns:
- PROCESSING OF SETTLEMENT SERVER
- PROCESSING OF TERMINAL
- PROCESSING OF WEB SERVER
- PROCESSING OF POINT SERVER

Terminal steps:
- S101 GAIN ACCESS TO GOODS SELECTION PAGE
- S102 GAIN ACCESS TO ORDER PROCEDURE PAGE
- S103 TRANSMIT MEMBER ID AND PASSWORD

Web server steps:
- S201 TRANSMIT LOGIN IMAGE
- S202 TRANSMIT AUTHENTICATION COMMAND
- S203 TRANSMIT POINT OBTAINING COMMAND
- S204 TRANSMIT ORDER FORM
- S205 TRANSMIT MEMBER INFORMATION OBATAINING COMMAND

Point server steps:
- S301 SEND NOTIFICATION OF AUTHENTICATION RESULT
- S302 SEND NOTIFICATION OF AVAILABLE POINT

Connectors: A1, B1, C1, D1

21

EP 1 227 421 A2

A1　　　　B1　　　　C1　　　　D1

| | S104 |
| SEND BACK CONTENTS OF ORDER, PURCHASER, THE NUMBER OF POINT, ETC. | |

SEND BACK MEMBER INFORMATION — S303

S206 — TRANSMIT ORDER INFORMATION AND ORDER NUMBER

S207 — TRANSMIT POINT OBATAINING COMMAND

READ AVAILABLE POINT — S304

SEND NOTIFICATION OF TEMPORARY BALANCE

S208 — TRANSMIT ORDER CONFIRMATION IMAGE

S305

S105 — CONFIRM ORDER

INSTRUCT TRANSMISSION OF SCRATCH NUMBER INPUT IMAGE — S209

A2　　　　B2　　　　C2　　　　D2

# FIG.3B

EP 1 227 421 A2

A2     B2     C2     D2

S401

TRANSMIT SCRATCH
NUMBER INPUT IMAGE

S106

TRANSMIT
SCRATCH NUMBER

TRANSMIT
CONFIRMATION IMAGE

S107

CONFIRM PURCHASE

S402

PROCESSING FOR
POINT SETTLEMENT

S403

SEND NOTIFICATION OF
SETTLEMENT RESULT AND
SETTLEMENT NUMBER

S404

S210

TRANSMIT
PURCHASE COMMAND

UPDATE POINT AND
PURCHASE
INFORMATION

S306

A3     B3     C3     D3

# FIG.3C

A3

B3

C3

D3

S307

SEND NOTIFICATION
OF END OF UPDATE

S211

SEND NOTIFICATION OF
COMPLETION OF
PURCHASE PROCEDURE

S405

SEND NOTIFICATION OF
COMPLETION OF
SETTLEMENT

END

FIG.3D

```
        ┌─────────────────────────┐
        │  PROCESSING AT MEMBER   │
        │    REGISTERING TIME     │
        └─────────────────────────┘
                    │
                    ▼
    ┌─────────────────────────────────┐   S501
    │ TERMINAL REQUESTS TRANSMISSION OF│
    │  MEMBER REGISTRATION PAGE DATA   │
    └─────────────────────────────────┘
                    │
                    ▼
    ┌─────────────────────────────────┐   S502
    │  DISPLAY MEMBER REGISTRATION PAGE│
    └─────────────────────────────────┘
                    │
                    ▼
    ┌─────────────────────────────────┐   S503
    │   TRANSMIT ADDRESS AND NAME TO   │
    │           WEB SERVER             │
    └─────────────────────────────────┘
                    │
                    ▼
    ┌─────────────────────────────────┐   S504
    │ TRANSMIT ADDRESS, NAME AND SITE ID│
    │         TO POINT SERVER          │
    └─────────────────────────────────┘
                    │
                    ▼
    ┌─────────────────────────────────┐   S505
    │  GENERATE MEMBER ID, LOGIN ID AND│
    │     PASSWORD, AND STORE THEM     │
    └─────────────────────────────────┘
                    │
                    ▼
    ┌─────────────────────────────────┐   S506
    │  TRANSMIT LOGIN ID AND PASSWORD TO│
    │           WEB SERVER             │
    └─────────────────────────────────┘
                    │
                    ▼
    ┌─────────────────────────────────┐   S507
    │     TRANSMIT IMAGE DATA WHOSE    │
    │    REGISTRATION IS COMPLETED TO  │
    │            TERMINAL              │
    └─────────────────────────────────┘
                    │
                    ▼
    ┌─────────────────────────────────┐   S508
    │  TERMINAL SENDS NOTIFICATION OF  │
    │   COMPLETION OF REGISTRATION     │
    └─────────────────────────────────┘
                    │
                    ▼
              ┌───────────┐
              │    END    │
              └───────────┘
```

# FIG.4

```
        ┌─────────────────────────────┐
        │    PROCESSING AT MEMBER      │
        │  INFORMATION CHANGING TIME   │
        └─────────────────────────────┘
                      │
                      ▼
        ┌─────────────────────────────┐   S601
        │ TERMINAL REQUESTS TRANSMISSION OF │
        │ MEMBER INFORMATION CHANGE PAGE DATA │
        └─────────────────────────────┘
                      │
                      ▼
        ┌─────────────────────────────┐   S602
        │ WEB SERVER TRANSMITS LOGIN IMAGE │
        │          TO TERMINAL         │
        └─────────────────────────────┘
                      │
                      ▼
        ┌─────────────────────────────┐   S603
        │ TRANSMIT LOGIN ID AND PASSWORD TO │
        │          WEB SERVER          │
        └─────────────────────────────┘
                      │
                      ▼
        ┌─────────────────────────────┐   S604
        │      WEB SERVER TRANSMITS    │
        │    AUTHENTICATION COMMAND TO │
        │          POINT SERVER        │
        └─────────────────────────────┘
                      │
                      ▼
              ╱─────────────────╲        S605
      NO     ╱ SUCCEED IN        ╲
   ◀────────  AUTHENTICATION?    
             ╲                   ╱
              ╲─────────────────╱
                      │ YES
                      ▼
        ┌─────────────────────────────┐   S606
        │ POINT SERVER TRANSMITS MEMBER ID │
        │          TO WEB SERVER       │
        └─────────────────────────────┘
                      │
                      ▼
        ┌─────────────────────────────┐   S607
        │ WEB SERVER TRANSMITS SITE ID TO │
        │          POINT SERVER        │
        └─────────────────────────────┘
                      │
                      ▼
        ┌─────────────────────────────┐
        │       (TO STEP S608)         │
        └─────────────────────────────┘
```

# FIG.5A

(FROM STEP S607)

**S608** — POINT SERVER TRANSMITS MEMBER INFORMATION TO WEB SERVER

**S609** — TRANSMIT MEMBER INFORMATION CHANGE PAGE DATA TO TERMINAL

**S610** — TERMINAL TRANSMITS CHANGED MEMBER INFORMATION AND CHANGE COMMAND TO WEB SERVER

**S611** — WEB SERVER TRANSMITS CHANGED MEMBER INFORMATION TO POINT SERVER

**S612** — STORE NEW MEMBER INFORMATION

**S613** — SEND NOTIFICATION IN WHICH CHANGE IN REGISTRATION IS COMPLETED

END

# FIG.5B

FIG.6

EP 1 227 421 A2

FIG. 7